Europäisches Patentamt

European Patent Office

Office européen des brevets

(19)

(11) **EP 0 604 250 B1**

(12) ## FASCICULE DE BREVET EUROPEEN

(45) Date de publication et mention
de la délivrance du brevet:
**02.05.1997 Bulletin 1997/18**

(51) Int Cl.⁶: **E21B 37/06**, E21B 41/02,
C10G 29/20, C23F 11/14,
B01D 53/14

(21) Numéro de dépôt: **93402848.1**

(22) Date de dépôt: **23.11.1993**

(54) **Application de la décahydro pyrazino 2,3-b pyrazine à la réduction du taux de sulfure d'hydrogène libre ou combiné présent dans un fluide**

Anwendung von decahydropyrazino 2,3-b pyrazin zur Verminderung des Gehalts von freiem oder gebundenem Schwefelwasserstoff in einer Flüssigkeit

Use of decahydropyrazino 2,3-b pyrazine for reducing the amount of free or combined hydrogen sulfide contained in a fluid

(84) Etats contractants désignés:
**BE DE DK GB IT NL SE**

(30) Priorité: **22.12.1992 FR 9215465**

(43) Date de publication de la demande:
**29.06.1994 Bulletin 1994/26**

(73) Titulaire: **SOCIETE FRANCAISE HOECHST
Société anonyme dite:
F-92800 Puteaux (FR)**

(72) Inventeurs:
• **Mabire, Frédéric
F-94110 Arcueil (FR)**
• **Blanc, Alain
F-93200 Saint-Denis (FR)**

(74) Mandataire: **Rinuy, Santarelli
14, avenue de la Grande Armée
75017 Paris (FR)**

(56) Documents cités:
EP-A- 0 264 261     EP-A- 0 383 499
EP-A- 0 411 745     WO-A-88/05039
FR-A- 2 332 049     US-A- 4 814 447

## Description

La présente invention concerne l'application de la décahydro pyrazino [2,3-b] pyrazine à la réduction du taux de sulfure d'hydrogène libre ou combiné présent dans un fluide.

Les fluides de production issus de certains gisements pétroliers, ainsi que certains effluents industriels tels ceux des stations d'épuration d'eau contiennent des quantités plus ou moins importantes de sulfure d'hydrogène libre ou combiné. Il est connu que le sulfure d'hydrogène ou hydrogène sulfuré est un gaz nauséabond, toxique, inflammable, corrosif et explosif. Afin d'éviter les risques d'accident et/ou la corrosion des matériels, il est nécessaire d'éliminer ou de réduire le plus rapidement possible les quantités de sulfure d'hydrogène libre ou combiné présent dans les fluides. Pour les gisements pétroliers importants situés en terre ferme cette élimination, quoique coûteuse, est relativement aisée et elle permet parfois, lorsque les taux de sulfure d'hydrogène sont importants, de pouvoir produire du soufre. Dans le cas d'une exploitation pétrolière en mer, d'un gisement pétrolier de faible débit ou d'une station d'épuration, on recherche des procédés d'élimination de l'hydrogène sulfuré rapides, peu coûteux, et ne nécessitant ni installations encombrantes ni investissements importants. Pour ce faire, il a été proposé l'emploi d'un aldéhyde tel que le formaldéhyde, le glyoxal, l'acroléine (brevets des Etats Unis d'Amérique N° 1991765, 2426318, 3459852, 4680127, 5085842, demandes de brevet européen N° 113408, 414170, 416969, demande de brevet allemand N° 3532955), de produits de condensation d'aldéhyde et d'alcanolamine tels ceux décrits dans le brevet des Etats Unis d'Amérique N° 4978512, des produits de condensation d'aldéhyde et d'amines primaires ou secondaires tels ceux décrits dans les demandes de brevet européen N° 264261, 383499, 411745, 475641, 475642, des imines ou des polyimines telles que celles décrites dans la demande de brevet européen N° 405719, des produits minéraux oxydants tels que le péroxyde d'hydrogène, le chlorite de sodium, le dioxyde de chlore, le dioxyde de soufre, le nitrite de sodium (demandes de brevet européen N° 82513, 261974, 389150, brevets des Etats Unis d'Amérique N° 4515759 et 4948494).

Ces différents produits, quoiqu'actifs, présentent encore des inconvénients, soit que leur efficacité soit trop faible et entraîne un prix de traitement élevé, soit qu'en fonction du pH du milieu à traiter, leur efficacité s'effondre par salification ou par dégradation notamment selon la réaction de Cannizaro pour les dérivés aldéhydiques, soit que leur manipulation soit dangereuse notamment pour les produits minéraux oxydants.

Or, afin de remédier à ces inconvénients, la demanderesse a découvert avec étonnement que la décahydro pyrazino [2,3-b] pyrazine, désignée ci-après DHPP, permet de réduire rapidement et même d'éliminer les quantités de sulfure d'hydrogène libre ou combiné présent dans un fluide.

La DHPP, produit connu en tant qu'intermédiaire dans la préparation de stabilisants pour polymères ou d'explosifs, de même que pour ses propriétés vulcanisantes (FR.1.310.524), est un produit solide, cristallisé, soluble dans l'eau, stable à la température ambiante.

Elle est très facilement obtenue par réaction du glyoxal avec l'éthylènediamine (H.BAGANZ et al. Ber., 94, 2676, (1961), R.L WILLER et al, J.Amer.Chem.Soc, 104, 3951, (1982), brevet des Etats Unis d'Amérique N° 2345237 et 4814447).

C'est pourquoi la présente invention a pour objet l'application de la décahydro pyrazino [2,3-b] pyrazine pour réduire le taux de sulfure d'hydrogène libre ou combiné contenu dans un fluide.

La présente invention a aussi pour objet un procédé pour réduire les quantités de sulfure d'hydrogène libre ou combiné présent dans un fluide, procédé caractérisé par le fait que l'on traite ledit fluide avec de la décahydro pyrazino [2,3-b] pyrazine.

L'expression sulfure d'hydrogène libre ou combiné peut désigner l'acide sulfhydrique et ses mono- et disels métalliques; les thiols de formule générale RSH dans laquelle R représente un radical organique en $C_1$-$C_4$ et leurs sels métalliques, les hydropolysulfures de formule générale $RS_nH$ dans laquelle, R a la signification donnée précédemment et n représente un nombre entier allant de 1 à 4, et leurs sels métalliques.

Le terme "fluide" peut désigner un gaz, un liquide, un aérosol ou une émulsion eau dans huile ou huile dans eau tels qu'un fluide de production d'un gisement pétrolier, le pétrole brut (brut pétrolier), les effluents de stations d'épuration, les gaz pétroliers, les gaz de fermentation divers, un fluide gazeux issu d'un gisement pétrolier.

La DHPP peut être utilisée pure à l'état cristallisé ou préférentiellement en solution aqueuse. On peut également utiliser la DHPP à l'état brut dans sa solution aqueuse de préparation.

Le procédé selon l'invention peut être mis en oeuvre très simplement en mettant en contact, à la température ambiante, le fluide à traiter avec une quantité efficace de DHPP pour atteindre le résultat cherché. Si la DHPP est soluble dans le fluide à traiter, on peut utiliser la DHPP à l'état cristallisé. De ce fait, une application intéressante de la DHPP concerne les fluides liquides dans lesquels elle est soluble.

Une autre application intéressante est caractérisée par le fait que le fluide contenant à l'état libre du sulfure d'hydrogène est traité avec une solution aqueuse de décahydro pyrazino [2,3-b] pyrazine. Lorsque le fluide est gazeux ou lorsqu'il ne dissout pas la DHPP, on traite préférentiellement ce fluide liquide ou gazeux avec une solution aqueuse concentrée de DHPP, soit par simple mélange dans le cas d'un liquide, soit par barbotage du fluide gazeux dans une solution aqueuse de DHPP ; on peut également utiliser des tours de lavage dans lesquelles le fluide à traiter et une solution aqueuse de DHPP circulent en sens contraire.

Les quantités de DHPP utilisées dans le procédé selon l'invention sont fonction de plusieurs paramètres nature du fluide, résultat désiré et taux initial en sulfure d'hydrogène libre ou combiné. Les quantités efficaces sont aisément déterminées par quelques essais préliminaires. Lorsqu'on souhaite une élimination totale du sulfure d'hydrogène libre ou combiné présent dans un brut pétrolier, on devra utiliser des quantités plus importantes de DHPP que pour obtenir le même résultat dans un fluide aqueux contenant la même quantité de sulfure d'hydrogène libre ou combiné. Généralement pour éliminer 1 mole de sulfure d'hydrogène libre ou combiné on utilise de 0,1 à 5 moles de DHPP, préférentiellement de 0,2 à 3 moles de DHPP.

Si on exprime ces quantités efficaces en poids de DHPP par poids d'équivalent d'hydrogène sulfuré, ces quantités varient de 0,4 à 20,8 mg de DHPP par mg d'équivalent.

Le procédé selon l'invention ci-dessus décrit convient particulièrement bien pour traiter des fluides, notamment liquides et particulièrement aqueux, contenant moins de 5 mmoles par litre de sulfure d'hydrogène libre ou combiné.

Le procédé de l'invention peut être utilisé pour traiter les fluides de production de gisements pétroliers, dans ce cas, on injecte soit au fond du puits (down hole), soit en tête de puits (well head) une solution aqueuse de DHPP à la dose de 1 à 20 ppm de DHPP par ppm de sulfure d'hydrogène libre ou combiné présent dans ce fluide de production. Toujours dans l'industrie pétrolière, le procédé de l'invention peut être utilisé pour réduire les taux de sulfure d'hydrogène libre ou combiné présent dans les constituants du fluide de production : eau, pétrole brut et gaz en sortie des séparateurs. Le gaz et le brut pétrolier sont préférentiellement traités dans des tours de lavage dans lesquelles on fait circuler une solution aqueuse de DHPP, à la dose de 5 à 30 ppm de DHPP par ppm de sulfure d'hydrogène libre ou combiné présent dans ces fluides. L'eau est avantageusement traitée en introduisant dans les bacs de stockage, une solution de DHPP, à la dose de 1 à 15 ppm par ppm de sulfure d'hydrogène libre ou combiné présent.

Les exemples suivants illustrent la présente invention sans toutefois la limiter.

### EXEMPLE 1

On prépare 4 solutions aqueuses, désignées A, B, C, D contenant pondéralement respectivement :

- A : 40% (0,281 mole) de décahydro pyrazino [2,3-b] pyrazine, DHPP,
- B : 40 % (0,689 mole) de glyoxal,
- C : 40 % (0,182 mole) d'hexahydro tri(hydroxy-2 éthyl)-1,3,5 s-triazine, HTHET,
- D : 40 % (0,666 mole) d'éthylènediamine.

Par ailleurs, on prépare en atmosphère inerte une solution aqueuse contenant par litre 0,18 g (0,75 mmole) de sulfure de sodium cristallisé avec 9 molécules d'eau et 12 mg d'hydroxyde de sodium. Cette solution est ensuite amenée à pH = 7,5 avec une solution aqueuse d'acide nitrique 0,05 M. Cette solution est désignée T.

On traite, à la température ambiante, en atmosphère inerte et sous agitation pendant 10 minutes, 0,4 l de la solution T avec 0,15 g de la solution A soit 60 mg de DHPP, puis on acidifie le milieu réactionnel à pH = 5 avec une solution aqueuse d'acide nitrique 0,05 M. La solution réactionnelle est ensuite dégazée pendant 30 minutes avec un barbotage d'azote (débit 25 l/h) et les gaz entraînés sont ensuite lavés dans une série de flacons laveurs contenant au total 0,1 l d'une solution aqueuse d'hydroxyde de sodium 1 M. On dose ensuite par potentiométrie à l'aide d'une électrode d'argent, en utilisant une solution aqueuse de nitrate d'argent 0,1 M, le sulfure d'hydrogène piégé dans les flacons laveurs. La quantité Q de sulfure d'hydrogène entraîné, exprimée en mg/l est calculée par l'expression (1)

$$Q = \frac{V \times 0,1 \times 34,08}{0,4 \times 2} = 4,26\ V \tag{1}$$

dans laquelle V représente le volume de solution aqueuse de nitrate d'argent utilisé.

L'efficacité E, exprimée en % pondéral, de la solution aqueuse A est calculée par l'expression (2)

$$E = \frac{Q_0 - Q}{Q_0} \times 100 \tag{2}$$

dans laquelle $Q_0$ représente la quantité en mg/l de sulfure d'hydrogène dosée dans la solution T en utilisant le même procédé de dosage (acidification à pH = S avec de l'acide nitrique 0,05 M, suivie d'un entraînement par un courant d'azote du sulfure d'hydrogène formé, piégeage de cet acide dans de la soude 1 M puis dosage par potentiométrie avec une solution 0,1 M de nitrate d'argent).

On reproduit l'essai précédent avec les solutions B et C, puis avec 0,3 g et 0,6 g des solutions A, B et C, et enfin avec 0,6 g de la solution D. Les résultats d'efficacité, E, de ces 10 essais sont donnés dans le tableau I en fonction des poids respectifs des solutions A, B, C ou D utilisées.

TABLEAU I

| Efficacité, E, en fonction de la dose d'emploi | | | |
|---|---|---|---|
| Doses | 0,15 g | 0,30 g | 0,60 g |
| A | 46 | 78 | 95 |
| B | 11 | 25 | 48 |
| C | 4 | 15 | 25 |

TABLEAU I (suite)

| Efficacité, E, en fonction de la dose d'emploi | | | |
|---|---|---|---|
| Doses | 0,15 g | 0,30 g | 0,60 g |
| D | | | 0 |

On constate que la solution aqueuse A est nettement plus efficace que les solutions B et C. L'emploi de 0,6 g de DHPP en solution aqueuse permet ainsi de réduire la quantité de sulfure d'hydrogène contenu dans 1 litre d'eau de 95 % lorsque cette quantité est de l'ordre de 20 à 25 mg/l. La solution D est inactive à la dose employée.

## EXEMPLE 2

Dans cet exemple, on évalue l'efficacité des solutions A, B et C préparées à l'exemple 1 pour réduire le taux de sulfure d'hydrogène contenu dans un brut pétrolier léger, P, en provenance d'un puits en Mer du nord, contenant au départ 60 ppm de sulfure d'hydrogène.

Cet exemple a été effectué selon un mode opératoire sensiblement similaire à celui décrit à l'exemple 1. Le brut P, 0,4 l, a été traité pendant 30 minutes avec 0,18 g et 0,30 g de solution A, B et C. Les résultats de l'efficacité de ces 6 essais sont donnés dans le tableau II en fonction des poids respectifs des solutions A, B et C utilisées.

TABLEAU II

| Efficacité, E, en fonction des doses | | |
|---|---|---|
| Doses | 0,18 g | 0,30 g |
| A | 64 | 75 |
| B | 20 | 47 |
| C | 61 | 71 |

L'examen du tableau II permet de constater que l'emploi de 0,3 g de DHPP en solution aqueuse permet de réduire à 15 ppm la quantité de sulfure d'hydrogène contenue dans 1 litre d'un brut pétrolier léger contenant à l'origine 60 ppm de sulfure d'hydrogène.

## EXEMPLE 3

On traite selon l'exemple 1, 1 kg d'une solution aqueuse, présentant un pH de 7,5 et contenant à l'état salifié 1 mg (0,03 mmole) de sulfure d'hydrogène avec 0,05 g de la solution A, soit 20 mg (0,14 mmole) de DHPP. En fin de traitement, on obtient une solution exempte de sulfure d'hydrogène libre ou combiné.

## EXEMPLE 4

Dans une série de 3 flacons laveurs contenant au total 290 g d'une solution aqueuse contenant 20 % en poids de DHPP, soit 58 g (408 mmoles), suivie d'une série de 3 flacons laveurs contenant au total 0,3 l de soude 1 M, soit 0,3 mole d'hydroxyde de sodium, on fait barboter 50 l/h d'azote et 50 l/h de sulfure d'hydrogène. Après 15 minutes de barbotage, on arrête la circulation des gaz. Un dosage effectué sur la solution de soude ne révèle aucune présence de soufre. Tout le sulfure d'hydrogène gazeux qui a barboté dans la solution aqueuse de DHPP a été absorbé.

## EXEMPLE 5 : Etude de la stabilité de la DHPP

On prépare une solution molaire, 1 M, de DHPP dans de l'eau, puis 1 litre de cette solution est acidifiée à pH = 2 avec de l'acide chlorhydrique concentré. On obtient ainsi 1 329 g d'une solution contenant 142,06 g (1 mole de DHPP) et 121,7 g (3,34 mole) de chlorure d'hydrogène. Cette solution est abandonnée 15 heures à la température ambiante, puis dans cette solution on dose par polarographie le glyoxal éventuellement présent. On dose ainsi 0,1145 mole de glyoxal soit 11,45 % de la quantité théorique calculée pour une hydrolyse totale de la DHPP. On effectue le même dosage de glyoxal sur la solution aqueuse 1 M de DHPP, après 15 heures on ne constate aucune formation de glyoxal. On en déduit que la DHPP en solution aqueuse est stable en milieu alcalin et qu'elle ne se dégrade que très légèrement en milieu acide.

## Revendications

1. Application de la décahydro pyrazino [2,3-b] pyrazine pour réduire le taux de sulfure d'hydrogène libre ou combiné contenu dans un fluide.

2. Application selon la revendication 1, caractérisée par le fait que le fluide est un fluide de production d'un gisement pétrolier.

3. Application selon la revendication 1 caractérisée par le fait que le fluide est un brut pétrolier.

4. Application selon la revendication 1, caractérisée par le fait que le fluide est un fluide gazeux issu d'un gisement pétrolier.

5. Application selon la revendication 1, caractérisée par le fait que le fluide est un fluide liquide dans lequel la décahydro pyrazino [2,3-b] pyrazine est soluble.

6. Application selon l'une quelconque des revendications 1 à 5 caractérisée par le fait que le fluide contenant à l'état libre du sulfure d'hydrogène est traité avec une solution aqueuse de décahydro pyrazino [2,3-b] pyrazine.

7. Application selon la revendication 6, caractérisée par le fait que l'on traite le fluide contenant à l'état libre du sulfure d'hydrogène avec de 0,1 à 5 moles de décahydro pyrazino [2,3-b] pyrazine par mole de sulfure d'hydrogène.

8. Application selon l'une quelconque des revendications 1 à 7 caractérisée par le fait que le fluide contient au moins 5 mmoles par litre de sulfure d'hydrogène libre ou combiné.

9. Procédé pour réduire les quantités de sulfure d'hydrogène libre ou combiné présent dans un fluide, caractérisé par le fait que l'on traite ledit fluide avec de la décahydro pyrazino [2,3-b] pyrazine.

10. Procédé selon la revendication 9, caractérisé par le fait qu'il est mis en oeuvre dans les conditions indiquées pour l'application selon l'une des revendications 2 à 8.

**Patentansprüche**

1. Verwendung von Decahydropyrazino[2,3-b]pyrazin zur Verminderung des Gehalts von freiem oder gebundenem Schwefelwasserstoff in einem Fluid.

2. Verwendung nach Anspruch 1, dadurch gekennzeichnet, daß das Fluid ein aus einer Erdölquelle gewonnenes Fluid ist.

3. Verwendung nach Anspruch 1, dadurch gekennzeichnet, daß das Fluid ein Rohöl ist.

4. Verwendung nach Anspruch 1, dadurch gekennzeichnet, daß das Fluid ein gasförmiges Fluid ist, das aus einer Erdölquelle stammt.

5. Verwendung nach Anspruch 1, dadurch gekennzeichnet, daß das Fluid ein flüssiges Fluid ist, in dem das Decahydropyrazino[2,3-b]pyrazin löslich ist.

6. Verwendung nach einem der Ansprüche 1 bis 5, dadurch gekennzeichnet, daß das Fluid, das Schwefelwasserstoff in freiem Zustand enthält, mit einer wäßrigen Decahydropyrazino[2,3-b]pyrazin-Lösung behandelt wird.

7. Verwendung nach Anspruch 6, dadurch gekennzeichnet, daß man das Fluid, das Schwefelwasserstoff in freiem Zustand enthält, mit 0,1-5 mol Decahydropyrazino[2,3-b]pyrazin pro mol Schwefelwasserstoff behandelt.

8. Verwendung nach einem der Ansprüche 1 bis 7, dadurch gekennzeichnet, daß das Fluid mindestens 5 mmol freien oder gebundenen Schwefelwasserstoff pro Liter enthält.

9. Verfahren zur Verminderung der Menge an freiem oder gebundenem Schwefelwasserstoff in einem Fluid, dadurch gekennzeichnet, daß man das Fluid mit Decahydropyrazino[2,3-b]pyrazin behandelt.

10. Verfahren nach Anspruch 9, dadurch gekennzeichnet, daß es unter den Bedingungen angewendet wird, die für die Verwendung nach einem der Ansprüche 2 bis 8 angegeben sind.

**Claims**

1. Use of decahydro pyrazino [2,3-b] pyrazine for reducing the proportion of free or combined hydrogen sulphide contained in a fluid.

2. Use according to claim 1, characterized in that the fluid is an oil deposit production fluid.

3. Use according to claim 1, characterized in that the fluid is a crude petroleum.

4. Use according to claim 1, characterized in that the fluid is a gaseous fluid from an oil deposit.

5. Use according to claim 1, characterized in that the fluid is a liquid fluid in which decahydro pyrazino [2,3-b] pyrazine is soluble.

6. Use according to any one of claims 1 to 5, characterized in that the fluid containing hydrogen sulphide in the free state is treated with an aqueous solution of decahydro pyrazino [2,3-b] pyrazine.

7. Use according to claim 6, characterized in that the fluid containing hydrogen sulphide in the free state is treated with 0.1 to 5 moles of decahydro pyrazino [2,3-b] pyrazine per mole of hydrogen sulphide.

8. Use according to any one of claims 1 to 7, characterized in that the fluid contains at least 5 mmoles per litre of free or combined hydrogen sulphide.

9. Process for reducing the quantities of free or combined hydrogen sulphide present in a fluid, characterized in that the said fluid is treated with decahydro pyrazino [2,3-b] pyrazine.

10. Process according to claim 9, characterized in that it is implemented under the conditions indicated for the use according to one of claims 2 to 8.